# EUROPÄISCHE PATENTSCHRIFT

(11) **EP 1 980 977 B1**
(45) Veröffentlichungstag und Bekanntmachung des Hinweises auf die Patenterteilung: **21.12.2011**
(21) Anmeldenummer: 08006789.5
(22) Anmeldetag: 03.04.2008
(51) Int. Cl.: G06K 19/10, G06K 19/14

(54) **Authentifizierbares Etikett sowie Vorrichtung zum Authentifizieren eines authentifizierbaren Etiketts**
Authenticable label and device for authenticating an authenticable label
Etiquette authentifiable et dispositif d'authentification d'une étiquette authentifiable

(30) Priorität: 04.04.2007 DE 102007016329
(43) Veröffentlichungstag der Anmeldung: 15.10.2008
(73) Patentinhaber: Embedded Innovation GmbH & Co. KG, 53757 Sankt Augustin (DE)
(72) Erfinder: Wack, Michael, 53757 Sankt Augustin (DE)
(74) Vertreter: Kramer - Barske - Schmidtchen

(56) Entgegenhaltungen:
- EP-A- 0 138 219
- EP-A- 1 564 680
- DE-A1- 10 317 257
- US-A1- 2007 019 349

## Beschreibung

Die Erfindung betrifft ein authentifizierbares Etikett gemäß dem Oberbegriff des Anspruchs 1. Die Erfindung betrifft weiter einen mit einem solchen Etikett versehenen Gegenstand sowie eine Vorrichtung zum Authentifizieren eines solchen Etiketts.

Unter einem RFID-Baustein wird im Folgenden eine Baugruppe verstanden, die auf einem beliebig gearteten Träger wenigstens einen als Transponder arbeitenden Mikrochip und eine Antenne aufweist. Eine Besonderheit des RFID-Bausteins liegt darin, dass er berührungslos über Radiowellen ansprechbar und auslesbar ist (Radio Frequency Identification) sowie gegebenenfalls beschreibbar (programmierbar) ist. Gebräuchlich sind beispielsweise Frequenzen in den Bereichen 100-500 kHz (LF); 10-15 MHz (HF); 433 MHz, 850-950 MHz (UHF); 2,4-5,8 GHz (Mikrowelle). Die Antenne ist entsprechend der dem Transponder zugeordneten Frequenz ausgestaltet.

Passive RFID-Transponder beziehen ihre Energie zur Versorgung des Mikrochips aus den empfangenen Funkwellen. Mit der Antenne als Spule wird durch Induktion ein Kondensator aufgeladen. Die Reichweite liegt zwischen wenigen Millimetern und einigen Metern.

Semipassive Transponder verfügen über eine eigene Energieversorgung. Die Sendeenergie wird jedoch den empfangenen Funkwellen entnommen. Es sind Reichweiten bis zu etwa 30 Metern möglich.

Aktive RFID-Transponder verfügen über eine eigene Energieversorgung, beispielsweise Batterie, der auch die Sendeleistung entnommen wird. Um die Lebensdauer der Energiequelle zu erhöhen, sind die RFID-Transponder normalerweise im Ruhezustand und werden nur über ein spezielles Aktivierungssignal in den Funkwellen aktiviert. Die Reichweite kann bis zu 100 Metern betragen.

Unter Etikett wird im Folgenden jedwelcher Informations- oder Datenträger bezeichnet, der zur Beschreibung, Identifizierung oder sonst welcher Kennzeichnung eines Objekts bzw. Gegenstandes dient, wobei der Gegenstand unterschiedlichster Art sein kann, wie eine Ware, eine Uhr, ein Wertschein, ein Geldschein, eine Aktie, eine Datenträgerkarte, eine Scheckkarte usw. Das Etikett kann in den Gegenstand integriert sein oder nachträglich an dem Gegenstand angebracht sein, im einfachsten Falle ein Folienstück, das an dem Gegenstand angebracht wird.

RFID-Systeme finden sich in unterschiedlichsten Anwendungen. Gemeinsam sind ihnen folgende drei Eigenschaften:

### - Elektronische Identifikation:

Das System ermöglicht eine eindeutige Kennzeichnung von Objekten und Personen durch auf dem RFID-Baustein elektronisch gespeicherte Daten.

### - Kontaktlose Datenübertragung:

Die Daten können zur Identifikation des Objekts oder der Person drahtlos ausgelesen werden.

### - Senden auf Abruf:

Ein mit einem RFID-Baustein gekennzeichnetes Objekt sendet seine Daten nur dann, wenn ein dafür vorgesehenes Lesegerät diesen Vorgang abruft.

Bei Anwendungen zur Identifikation eines Produktes oder einer Person besteht das Problem, dass Daten durch unautorisierte Schreibzugriffe verfälscht werden können. Dabei müssen allerdings zur Identifikation des RFID-Bausteins selbst dienende Identifikationsdaten und eventuelle Sicherheitsinformationen, die beispielsweise durch Verschlüsselung der Identifikationsdaten erzeugt werden, unverändert bleiben, so dass das Lesegerät die Identität des RFID-Bausteins weiterhin korrekt erkennt. Ein Angriff durch unautorisierte Schreibzugriffe ist somit bei RFID-Systemen möglich, die neben Identifikationsdaten und Sicherheitsdaten weitere Inhalte auf dem RFID-Baustein speichern.

Eine andere Gefahr besteht darin, dass ein Angreifer sich in den Besitz der Identifikationsdaten und eventuellen Sicherheitsinformationen eines RFID-Bausteins bzw. -Transponders bringt und diese dazu benutzt, gegenüber einem Lesegerät eine korrekte Identität vorzutäuschen. Dies kann beispielsweise mittels eines Gerätes geschehen, das beliebige Transponder emulieren kann, oder indem ein neuer Transponder als Duplikat des alten hergestellt wird. Der Angriff bewirkt, dass mehrere Transponder mit gleicher Identität in Umlauf sein können.

Eine weitere Gefahr besteht darin, dass ein Angreifer ein mit einem RFID-Baustein versehenes Etikett physisch von dem zu kennzeichnenden Gegenstand trennt und auf einen anderen Gegenstand aufbringt. Hierin liegt ein fundamentales Sicherheitsproblem, falls das mit dem RFID-Baustein versehene Etikett bzw. der RFID-Baustein zerstörungsfrei von dem Gegenstand getrennt werden kann.

Eine zusätzliche Gefahr besteht darin, dass die Kommunikation zwischen dem Lesegerät und dem Transponder durch Auffangen und Dekodieren der Funksignale abgehört wird.

Aus der DE 10 2005 016 261 A1 ist ein mit einem RFID-Baustein versehenes Etikett bekannt, das als Manipulationsschutz vor der Erstbenutzung eine Abdeckung aus einer Kunststoff-Metall-Verbundfolie mit Void-Effekt aufweist.

Aus der DE 39 32 505 A1 ist ein Datenträger mit einem personalisierten Hologramm bekannt, der beispielsweise als Ausweiskarte oder Kreditkarte verwendbar ist:

Aus der CA 2 399 092 A1 ist ein Authentifizierungsverfahren für ein RFID-Etikett bekannt, auf dem ein gespeicherter Sicherheitsdatenblock kryptographisch dem RFID-Etikett zugeordnet ist.

Aus der DE 10 2005 026 559 A1 ist eine RFID-Etikettenanordnung bekannt, bei der zwischen dem Transponder und der Oberfläche eines zu etikettierenden Gegenstandes eine Trägerschicht zur Beabstandung des Transponders von der Oberfläche des Gegenstandes vorgesehen ist, um eine Beeinträchtigung der Datenkommunikation mit dem Transponder durch den Gegenstand zu vermeiden.

In der DE 20 2005 016 311 U1 ist eine Abrollvorrichtung für auf einem Band der Reihe nach angeordnete RFID-Etiketten vorgesehen, bei der die von einer Rolle abgerollten Etiketten durch einen Metalltunnel geführt werden und anschließend mittels RF-Signalen programmiert werden. Der Metalltunnel dient dazu, dass die Datenkommunikation lediglich zwischen einem Schreibgerät und dem gerade zu programmierenden Etikett stattfindet.

Aus der WO 2006/005149 A2 ist ein Verfahren zum Herstellen einer Polymerschicht mit einem latenten polarisierten Bild bekannt, bei dem eine Polymerlösung in einem organischen Lösungs-

mittel hergestellt wird, die Lösung auf ein lichtreflektierendes Substrat aufgebracht wird, dann getrocknet wird, um eine optisch isotrope Polymerschicht herzustellen, und wobei anschließend auf der Polymerschicht bilderzeugende Flächen mit anisotropen Eigenschaften erzeugt werden. Auf diese Weise erzeugte Bilder sind bei normaler Betrachtung unsichtbar und werden bei Betrachtung mit polarisiertem Licht sichtbar.

Aus der DE 102 04 870 A1 ist ein Verfahren zur Fälschungssicherung eines Wertträgers, beispielsweise einer Banknote, eines Ausweises oder einer Chipkarte bekannt, bei dem am Wertträger ein Sicherheitsmerkmal mit zufällig verteilten Merkmalen angebracht wird, beispielsweise statistisch verteilte Fäden. Individuelle Parameter des Sicherheitsmerkmals werden definiert erfasst, die Parameterdaten werden kodiert und die kodierten Parameterdaten werden auf den Wertträger aufgebracht. Das Versehen des Wertträgers mit dem Sicherheitsmerkmal mit zufällig verteilten Merkmalen bedeutet einen hohen Aufwand bei der Herstellung des Wertträgers, das Auslesen und Ermitteln von Parameterdaten ist ebenfalls verhältnismäßig aufwendig.

Aus der EP 0 889 448 A2 ist ein Verfahren zum Verifizieren der Herkunft eines Gegenstandes bekannt, bei dem ein Etikett mit gegenstandsbezogener Information hergestellt wird, wenigstens ein Teil der Informationen verschlüsselt wird, der Gegenstand, das Etikett und eine auslesbare Darstellung der verschlüsselten Informationen fest miteinander verbunden werden.

Die DE 199 10 455 A beschreibt einen als Visitenkarte dienenden Datenträger, der einen vorzugsweise nicht flüchtigen Speicherbereich aufweist, in dem Daten über einen Benutzer in Art und Umfang einer Visitenkarte gespeichert sind. Der Datenträger kann mittels eines elektrischen Gerätes, insbesondere eines Telekommunikationsendgerätes, ausgelesen werden, so dass die gespeicherten Daten dann für eine weitere Verwendung zur Verfügung stehen. Der Datenträger kann zusätzlich eine alphanumerische Beschriftung aufweisen, die die im Speicherbereich gespeicherten Daten wiedergibt.

In der EP 1 752 935 A1 ist ein Pfandetikett mit einem elektromagnetisch auslesbaren Code und einem optisch auslesbaren Code beschrieben. Der elektromagnetisch auslesbaren Code ist nach dem Auslesen von einem Lesegerät entwertbar. Bei der Herstellung der Pfandetiketten wird mindestens einer der Codes an einen Steuerrechner und von diesem an eine Steuerelektronik in Abgabestationen zur Freigabe der Pfandetiketten zum Zwecke der Auszahlung des Pfandes nach Entwertung des elektromagnetisch auslesbaren und entwertbaren Codes übermittelt.

Die DE 10 2005 0284145 A1 beschreibt einen optischen Datenspeicher mit einer Schichtenstruktur, die eine Informationsschicht auf Basis eines photoadressierbaren Polymers aufweist.

In der DE 103 17 257 A1, von der im Oberbegriff des neuen Anspruchs 1 ausgegangen wird, ist ein kontaktloser Datenträger mit einem RFID-Baustein und weiteren Daten beschrieben, die über einen optischen Datenübertragungskanal an ein Lesegerät übertragbar sind. Die über den optischen Datenübertragungskanal übertragbaren Daten können unterschiedlicher Art sein: auf dem Datenträger kann ein Matrix-Code oder ein Barcode aufgebracht sein. In einer anderen Ausführungsform kann auf dem Datenträger ein Leuchtmittel zum Senden von optischen Signalen angeordnet sein. Weiter ist es möglich, auf dem Datenträger ein optisches Empfangsmittel zum Empfangen von optischen Signalen anzuordnen. In jedem Fall dienen ausschließlich die über den optischen Datenübertragungskanal übertragenen Daten zur Authentifizierung des Datenträgers, um die Berechtigung für eine anschließende Transaktion unter Verwendung des RFID-Bausteins vorzuweisen. Dadurch wird die Feststellung der willentlichen Benutzung des Datenträgers durch den Inhaber sichergestellt. Eine Überprüfung der Echtheit bzw. Unversehrtheit des Datenträgers dahingehend, dass eine vorbestimmte Zuordnung zwischen dem RFID-Baustein und den optischen Daten besteht, ist nicht vorgesehen.

Des Weiteren ist aus der DE 1 564 680 A1 eine Chipkarte bekannt, die einen Chip und einen optischen Speicherbereich aufweist. Auf der Karte werden Daten, verschlüsselte Daten und entsprechende Schlüssel zum Verschlüsseln der Daten gespeichert.

Die EP 0 138 219 zeigt eine Speicherkarte mit optisch auslesbaren Daten, auf der die Verschlüsselung der optisch auslesbaren Daten durch einen Mikrokontroller, der auf der Karte angeordnet ist, erfolgt.

Die WO 2005/043470 A1 offenbart ein Verfahren und eine Vorrichtung, die eine plattformunabhängige Ausführumgebung zum Ausführung von eingebetteten Anweisungen liefert.

Der Erfindung liegt die Aufgabe zugrunde, ein authentifizierbares Etikett, eine Vorrichtung zum Authentifizieren eines solchen Etiketts und ein Verfahren zum Authentifizieren eines solchen Etiketts anzugeben, die einen erhöhten Schutz gegen Manipulationsmöglichkeiten aufweisen.

Ein authentifizierbares Etikett zur Lösung der Aufgabe wird mit den Merkmalen des Anspruchs 1 angegeben.

Das erfindungsgemäße Etikett muss nicht einteilig ausgebildet sein, sondern kann zwei Teile enthalten, die getrennt voneinander an dem zu kennzeichnenden Gegenstand aufgebracht werden, wobei ein Teil des Etiketts den RFID-Baustein und der andere Teil den optischen Datenträger enthält.

Die Ansprüche 2 und 3 sind auf zwei vorteilhafte Ausführungen des optischen Datenträgers gerichtet.

Mit den Merkmalen des Anspruchs 4 wird zusätzliche Sicherheit bei der Überprüfung des mit dem Etikett versehenen Gegenstandes auf Echtheit erzielt.

Mit den Merkmalen der Anspruchs 5 wird die Manipulationssicherheit zusätzlich verbessert.

Gemäß den Ansprüchen 6 und/oder 7 enthält die optisch auslesbare Information zumindest einen Teil der auf dem RFID-Baustein gespeicherten Daten, wobei diese Daten vor ihrer Umwandlung in die optisch auslesbare Information in vorbestimmter Weise verschlüsselt werden. Bei dieser Verschlüsselung handelt es sich nicht um eine allgemein bekannte Verschlüsselung, wie ein Strich- oder Barcodeverfahren (eindimensional, zweidimensional, matrixförmig usw.), sondern um eine kryptographische Verschlüsselung mittels eines nur autorisierten Stellen bekannten Codes oder Algorithmus. Die Darstellung der verschlüsselten Information kann dann durch allgemein bekannte Verschlüsselungsverfahrenn wie mit Strich- oder Barcode, erfolgen. Auf diese Weise ist sichergestellt, dass einem jeweiligen RFID-Baustein nur ein einziger optischer Datenträger zugeordnet ist, der nur von autorisierten Stellen erzeugt und/oder ausgelesen werden kann.

Mit den Merkmalen des Anspruchs 6 wird das Etikett dadurch identifiziert, dass die optisch auslesbare Information nach ihrer Umwandlung in digitale Daten und anschließender Decodierung mit Identifizierungsdaten des RFID-Bausteins verglichen wird.

Bei dem Etikett gemäß Anspruch 7 geschieht die Identifizierung dadurch, dass die optisch ausgelesene Information nach deren Umwandlung in digitale Daten und anschließender Decodierung mit auf dem RFID-Baustein gespeicherten Daten zur Identifizierung des mit dem Etikett versehenen Gegenstandes verglichen wird.

Mit den Merkmalen der Anspruchs 8 wird die Manipulationssicherheit zusätzlich verbessert.

Mit den Merkmalen des Anspruchs 9 wird ein erfindungsgemäßer Aufbau einer Vorrichtung zum Authentifizieren erfindungsgemäßer Etiketten zur Lösung der Aufgabe angegeben.

Die erfindungsgemäße Vorrichtung wird mit den Merkmalen der Ansprüche 10 und 11 in vorteilhafter Weise weitergebildet.

Mit den Merkmalen des Anspruchs 12 wird ein erfindungsgemäßer Aufbau eines Verfahrens zum Authentifizieren erfindungsgemäßer Etiketten zur Lösung der Aufgabe angegeben.

Das Verfahren wird mit den Merkmalen des Anspruchs 13 in vorteilhafter Weise weitergebildet.

Die Erfindung wird im Folgenden beispielhaft und mit weiteren Einzelheiten erläutert. In den Figuren stellen dar:
- Fig. 1: eine Aufsicht auf ein erfindungsgemäßes Etikett mit sichtbarer optischer Informa- tion,
- Fig. 2: einen Querschnitt durch das Etikett gemäß Fig. 1 in verkleinertem Maßstab,
- Fig. 3: eine Prinzipanordnung einer Vorrichtung zum Authentifizieren eines erfindungs- gemäßen Etiketts,
- Fig. 4: ein Flussdiagramm zur Erläuterung der Funktion der Vorrichtung,
- Fig. 5: ein Flussdiagramm zur Erläuterung der Herstellung eines mit einem Programm ver- sehenen Etiketts, und
- Fig. 6: ein Flussdiagramm zur Erläuterung der Prüfung eines gemäß Fig. 5 hergestellten Etiketts.

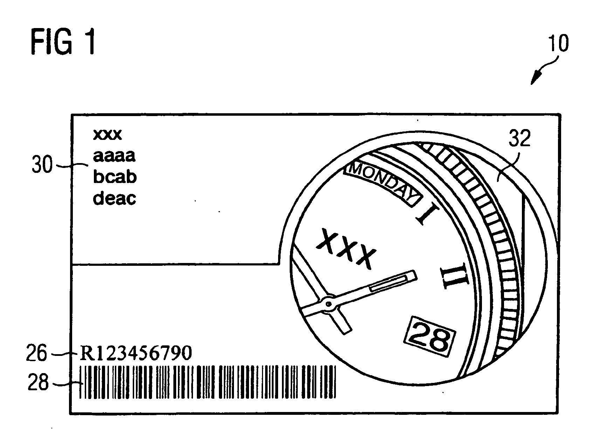

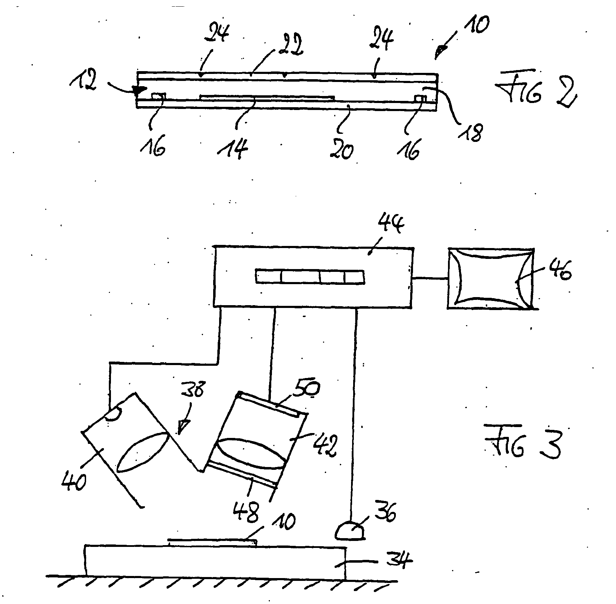

Fig. 1 zeigt eine Aufsicht und Fig. 2 zeigt einen Querschnitt eines erfindungsgemäßen Etiketts.

Gemäß Fig. 2 enthält ein insgesamt mit 10 bezeichnetes Etikett einen RFID-Baustein 12 mit einem RFID-Transponder 14, einer Antenne 16 und gegebenenfalls einer nicht dargestellten eigenen Energieversorgung.

Aufbau und Funktion des RFID-Bausteins sind an sich bekannt und werden daher nicht im Einzelnen beschrieben. Im einfachsten Fall kann der RFID-Baustein aus einer Folie mit einer aufgedruckten Schaltung aus elektrisch leitfähigem Lack bestehen. Der RFID-Transponder, der einen Mikrochip mit den notwendigen Funktionalitäten einschließlich eines Speichers enthält, kann in ein Trägersubstrat 18 eingebettet oder auf dieses aufgebracht sein. Im dargestellten Beispiel ist der RFID-Baustein 12 an seiner Unterseite mit einer Befestigungsfolie 20 versehen, mittels der er auf einem mit Hilfe des RFID-Bausteins zu kennzeichnenden Gegenstand anbringbar ist.

An seiner Oberseite ist der RFID-Baustein 12 mit einer optischen Folie 22 verbunden, die optische Information enthält, vorteilhafterweise derart, dass die optische Information latent vorhanden ist, d.h. bei normaler Betrachtung im Tageslicht oder unter üblicher Beleuchtung nicht sichtbar ist. Die optische Folie 22 kann unabhängig von dem RFID-Baustein 12 hergestellt sein und nachträglich an dem Trägersubstrat 18 angebracht sein oder sie kann unmittelbar beispielsweise als Polymerschicht auf das Trägersubstrat 18 aufgebracht sein oder aber der RFID-Transponder 14 mit Antenne 16 kann unmittelbar auf die optische Folie 22 aufgebracht sein, so dass diese unmittelbar als Trägersubstanz dient. Die optische Folie 22 kann mit einer zusätzlichen Schutzschicht gegen Umgebungseinflüsse geschützt sein.

Die Bildinformation kann auf oder in der optischen Folie 22 derart enthalten sein, dass sie nur mit Licht eines bestimmten Spektrums oder einer vorbestimmten Polarisation oder bei einem vorbestimmten Einfallswinkel aufscheint usw.. Bei einer beispielhaften Ausführungsform ist die optische Folie 22 eine Folie, wie sie in der eingangs genannten internationalen Patentanmeldung WO 2006/005149 A2 beschrieben ist. In einer solchen zunächst optisch isotropen Folie können mit Hilfe eines geeigneten Druckers und/oder durch direkte Abbildung eines Bildes mit Licht einer geeigneten Frequenz optisch anisotrope Bereiche erzeugt werden, die bei Betrachtung mit polarisiertem Licht, vorzugsweise zirkular polarisiertem Licht, als Bildinformation sichtbar werden.

Zusammenfassend enthält die optische Folie die optische Information in vorbestimmter Weise, wobei das Aufbringen der optischen Information auf an sich bekannte Weise erfolgen kann. Vorteilhaft ist die optische Folie der Art, dass in ihr latente Bilder erzeugt werden können, die bei geeigneter Betrachtung sichtbar werden und die, einmal in die optische Folie 22 eingebracht bzw. auf diese aufgebracht, nicht ohne weiteres verändert werden können.

Die optische Folie 22 ist vorteilhafterweise mit dem RFID-Baustein 12 bzw. zumindest mit dem RFID-Transponder 14 derart verbunden, dass sie nicht ohne Zerstörung der optischen Folie 22 und/oder des RFID-Bausteins 12 bzw. des RFID-Transponders 14 von dem RFID-Transponder 14 abgelöst werden kann. Dies ist beispielsweise dadurch möglich, dass die optische Folie 22 mit Schwächungslinien 24 versehen wird, die bei einem Versuch, die Folie 22 von dem RFID-Baustein 12 zu lösen, reißen und zur Zerstörung der Folie führen.

Die Authentifizierbarkeit bzw. Echtheit des Etiketts wird durch folgende Maßnahmen gewährleistet:
- In dem RFID-Transponder 14 bzw. dem RFID-Baustein 12 sind für dessen Authentifizierung Identifikationsdaten gespeichert, beispielsweise in Form einer fortlaufenden Nummer (Seriennummer). Weitere, im RFID-Baustein 12 gespeicherte Daten sind beispielsweise einem Gegenstand, der mit dem Etikett 10 versehen werden soll, zugehörige Daten, wie technische Daten, Identifizierungsdaten, Detailbeschreibung, Ablaufdaten usw.
- Die optische Folie 22 trägt vorteilhafterweise folgende optisch lesbare Informationen:
   ■ aus den Identifikationsdaten des RFID-Transponders 14 durch Kodierung bzw. kryptographische Verschlüsselung hergeleitete kodierte Identifikationsdaten 26, die in Alpha-numerischer Form und/oder beispielsweise in Form eines Barcodes 28 vorhanden sind;
   ■ Produktinformationen 30, die den Gegenstand, an dem das Etikett 10 angebracht werden soll, betreffen, vorteilhafterweise zu dessen Authentifizierung geeignete Daten, ebenfalls in verschlüsselter Form, wobei vorteilhafterweise derselbe Schlüssel wie zur Verschlüsselung der Identifikationsdaten verwendet wird;
   ■ eine Abbildung 32 des Gegenstandes, der mit dem Etikett 10 versehen werden soll.

Die optische Folie 22 kann vor oder nach ihrer Verbindung mit dem RFID-Baustein 12 mit den optischen Informationen 26, 28, 30, 32 versehen werden, wobei in jedem Fall gewährleistet sein muss, dass der Code bzw. Algorithmus, mit dem die auf dem RFID-Baustein 12 gespeicherten Identifikationsdaten in die kodierten Identifikationsdaten 26 umgewandelt werden oder umgekehrt nur einer oder mehreren autorisierten Stellen bekannt ist.

Das Etikett wird auf einen zu etikettierenden Gegenstand 34 (Fig. 3), wie Wertgegenstand (Schmuckstück, usw.), Gebrauchsgegenstand, Lebensmittel, Dokument, Chipkarte, Verpackung, Container usw., aufgebracht, wobei dieses Aufbringen derart sein kann, dass das Etikett 10 nicht zerstörungsfrei von dem Gegenstand 34 lösbar ist.

Für eine Authentifizierung des Etiketts 10 wird dieses, vorteilhafterweise zusammen mit dem Gegenstand 34, einer Leseeinrichtung zugeführt, die in Fig. 3 dargestellt ist. Die Leseeinrichtung enthält einen Sender/Empfänger 36 zur Kommunikation mit dem RFID-Baustein 12, ein optisches Lesegerät 38 mit einer Beleuchtungseinheit 40 und einer Leseeinheit 42, ein elektronisches Steuergerät 44 und einen Bildschirm 46.

Die Beleuchtungseinheit 40 und die Leseeinheit 42 sind an die Art der optischen Folie 22 angepasst. Wenn diese ein nur durch einen Polarisator hindurch erkennbares latentes Bild enthält, enthält die Leseeinheit 42 einen Polarisator 48, beispielsweise einen zirkularen Polarisator, durch den hindurch das Bild auf eine Bildplatte 50 abgebildet wird, so dass die Bildinformation anschließend elektronisch weiterverarbeitet werden kann. Das Steuergerät 44 enthält eine Einrichtung zum Umwandeln der Bilddaten in digitale Daten, die mit den vom Sender/Empfänger mit Hilfe von Radiofrequenzübertragung ausgelesenen Daten des RFID-Bausteins vergleichbar sind, und enthält eine Dekodiereinrichtung, in der die in digitale Daten umgewandelten optischen kodierten Identifikationsdaten 26 und/oder aus dem Barcode 28 erzeugte Daten dekodiert bzw. entschlüsselt werden. In einer Vergleichseinrichtung werden diese dekodierten Daten mit den vom Sender/Empfänger 36 unmittelbar vom RFID-Transponder ausgelesenen Identifikationsdaten verglichen. Ein positiver Vergleich wird beispielsweise auf dem Bildschirm 46 angezeigt, auf dem auch die weiteren optischen oder sonstigen digitalen Informationen sichtbar gemacht werden können.

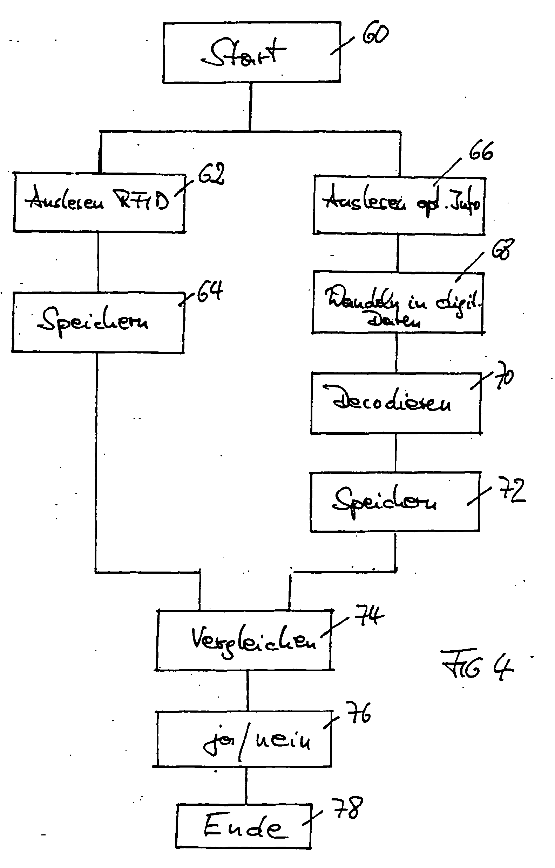

Fig. 4 zeigt ein Ablaufdiagramm des in der Vorrichtung gemäß Fig. 3 ablaufenden Verfahrens:

Wenn ein zu authentifizierendes Etikett bzw. ein damit versehener Gegenstand erkannt wird oder manuell ein Befehl zum Authentifizieren eingegeben wird, startet ein im Steuergerät 44 abgelegtes Programm im Schritt 60.

Im Schritt 62 werden die auf dem RFID-Baustein gespeicherten Daten ausgelesen und im Schritt 64 gespeichert.

Vorzugsweise parallel dazu werden im Schritt 66 die optischen Informationen ausgelesen, im Schritt 68 digitalisiert, im Schritt 70 mit Hilfe eines nur in einem zulässigen Steuergerät abgelegten Programms dekodiert und im Schritt 72 gespeichert.

Im Schritt 74 werden dann die in den Schritten 64 und 72 gespeicherten Daten miteinander verglichen. Im Schritt 76 wird das Ergebnis des Vergleichs angezeigt. Im Schritt 78 endet das Programm.

Wenn im Schritt 74 Identifikationsdaten des RFID-Bausteins mit aus optisch gespeicherter Information gewonnenen und dann dekodierten Daten verglichen werden, und/oder wenn gegenstandsbezogene Daten miteinander verglichen werden, so kann die Echtheit des Etiketts selbst überprüft und nachgewiesen werden. Die Zuordnung des Etiketts zu dem Gegenstand, d.h. dessen Echtheit kann bei nachgewiesener Echtheit des Etiketts sowohl durch die unzerstörbare Befestigung des Etiketts an dem Gegenstand überprüft werden, als auch dadurch, dass auf dem RFID-Baustein gespeicherte und/oder optische gespeicherte Information, die gegebenenfalls dekodiert werden muss, mit Identifikationsmerkmalen des Gegenstandes, beispielsweise dessen eingravierter Seriennummer, verglichen wird.

Die Authentifizierung des Etiketts 10 kann erfolgen, während sich der mit dem Etikett versehene Gegenstand 34 unter der beschriebenen Vorrichtung vorbei bewegt. Eine Authentifizierung kann auch derart erfolgen, dass die optische Information unter Zuhilfenahme eines einfachen Polarisators ausgelesen wird, die auf dem RFID-Baustein 12 gespeicherten Daten in an sich bekannter Weise mit Hilfe von Radiofrequenzabfrage ausgelesen werden, die optisch ausgelesenen kodierten Identifikationsdaten 26 oder die diesen entsprechenden aus dem Barcode 28 abgeleiteten Alpha-numerischen Daten entschlüsselt bzw. dekodiert werden und mit den Identifikationsdaten des RFID-Bausteins 12 verglichen werden. Es versteht sich, dass umgekehrt auch die vom RFID-Baustein 12 ausgelesenen Daten verschlüsselt und mit den optischen kodierten Identifikationsdaten verglichen werden können.

Die beschriebene Anordnung kann vielfältig abgeändert werden. Beispielsweise ist die Befestigungsfolie 20 nicht zwingend erforderlich, vielmehr kann das Trägersubstrat 18 unmittelbar auf dem Gegenstand 34 angebracht werden.

Das Etikett kann insgesamt zweiteilig sein, wobei der eine Teil den RFID-Baustein enthält und an einer optisch nicht zugänglichen Stelle des zu kennzeichnenden Gegenstandes angebracht werden kann, und der andere Teil den optischen Datenträger enthält und an einer optisch zugänglichen Stelle des zu kennzeichnenden Gegenstandes angebracht ist.

Die Beleuchtungseinheit 40 kann als Beamer ausgebildet sein, so dass, sofern optisch möglich, in der optischen Folie 22 durch Belichtung die dann optisch auslesbaren Bilder bzw. Informationen erzeugt werden. Es ist nicht zwingend, dass die optische Information nur durch Benutzung einer speziellen Ausleseeinrichtung sichtbar wird, d.h. als latentes Bild vorhanden ist, das bei normaler Betrachtung nicht oder nur kaum sichtbar ist.

Das optische Lesegerät 38 kann beispielsweise dadurch abgeändert werden, dass die Beleuchtungseinheit 40 Licht senkrecht nach unten abstrahlt und das durch den Polarisator 48 fallende Licht mit Hilfe einer halbdurchlässigen Platte ausgekoppelt wird. Bei ausreichender Helligkeit der Umgebung und geeigneter Ausbildung der optischen Folie 22 ist eine Beleuchtungseinheit 40 unter Umständen überflüssig.

Die auf der optischen Folie vorhandenen Informationen müssen nicht zwingend verdeckt, d.h. bei normalem Tageslicht nicht lesbar sein. Dadurch werden die Logistik, Kosten und Handling weiter vereinfacht.

Es versteht sich, dass, falls die optische Folie eine metallische Beschichtung voraussetzt, diese metallische Beschichtung in den Bereichen der Antenne des RFID-Bausteins ausgespart ist, wobei in diesen Bereichen zusätzlich eine Ausstanzung vorgesehen sein kann, die nur eine zerstörende Ablösung der Folie zulässt.

Die anhand der Fig. 3 beschriebene Leseeinrichtung kann eine weitere Einrichtung enthalten, die ein Etikett nach dessen Authentifizierung zerstört, indem beispielsweise der Mikroprozessor des RFID-Bausteins unbrauchbar gemacht wird oder vorbestimmte optische Eigenschaften der optischen Folie zerstört werden.

Eine weitere Abänderung und Ergänzung kann darin bestehen, dass auf der optischen Folie 22 die Information nicht in Form verschlüsselter Zahlen, sondern als ausführbarer Programmcode hinterlegt wird. Ein typischer 2D-Barcode nach Standard PDF417 oder Data Matrix Code nach ISO/IEC 24720:2006 mit Fehlerkorrektur speichert zwischen 300 und 2000 Zeichen. Das genügt, um ein einfaches Programm zu hinterlegen. Zur Authentifizierung wird das als Barcode auf der optischen Folie hinterlegte Programm mit einem Barcode-Lesegerät eingelesen und vom Steuergerät 44 ausgeführt. Die Programmiersprache kann speziell entworfen sein und enthält beispielsweise Befehle zum Abfragen einer Seriennummer des Lesegerätes, des Benutzers, eine Legitimierung über das Internet oder die Abfrage spezieller Speicherzellen, die nur in dem autorisierten Lesegerät vorhanden sind und entsprechend angesprochen werden können. In dem Programm kann auch eine Dekodierung gespeicherter kodierter Informationen enthalten sein.

Ein wie vorstehend ausgebildetes Programm, das in optisch lesbarer Form auf dem Etikett gespeichert ist, kann in Verbindung mit weiteren, wie vorstehend beschriebenen auf dem RFID-Baustein und der optischen Folie gespeicherten Informationen bzw. Daten zur Authentifizierung verwendet werden oder alleine, indem es Programmschritte auslöst, die zur Authentifizierung des Etiketts und des damit versehenen Gegenstandes anhand von in einer autorisierten Lesevorrichtung gespeicherten Daten dienen.

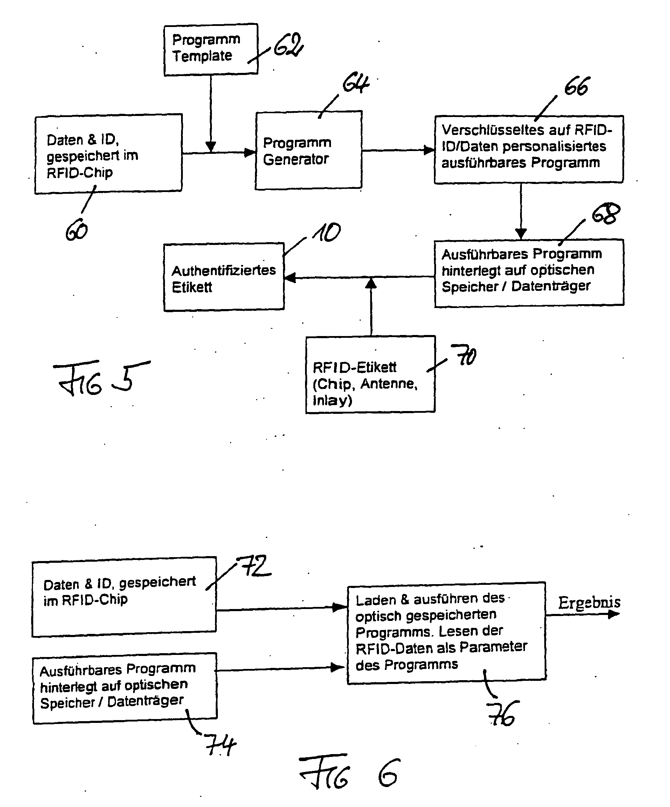

Die Fig. 5 und 6 zeigen Flussdiagramme zur Erläuterung der vorgenannten Ausführungsform des Etiketts, bei der auf der optischen Folie 22 die Information nicht lediglich in Form von aus den auf dem RFID-Chip gespeicherten Daten abgeleiteten, verschlüsselten Zahlen hinterlegt ist, sondern als ein ausführbares Programm.

Gemäß Fig. 5 sind mit 60 die in dem RFID-Chip gespeicherten Identifikations- und Gegenstandsdaten bezeichnet. Zumindest ein Teil dieser Daten wird in einer nicht dargestellten Vorrichtung zur Herstellung eines erfindungsgemäßen Etiketts ausgelesen und unter Verwendung eines Programmtemplates 62 mit einem Programmgenerator 64 in ein Programm 66 umgeschrieben, das insgesamt durch Verwendung zumindest eines Teils der auf dem RFID-Chip gespeicherten Daten und des Programmtemplates ein verschlüsseltes, auf die RFID-Daten personalisiertes ausführbares Programm bildet. Dieses ausführbare Programm 66 wird auf dem optischen Datenträger beispielsweise in Form eines Barcodes gespeichert, wobei der im Schritt 68 erzeugte Datenträger im Schritt 70 mit dem RFID-Etikett, das wenigstens ein Halbleiterchip und eine Antenne auf einem Inlay enthält, zu dem erfindungsgemäßen authentifizierbaren Etikett 10 zusammengefügt wird.

In Fig. 6 ist dargestellt, wie das Etikett beispielsweise in der Vorrichtung gemäß Fig. 3 ausgelesen und geprüft wird:

Die auf dem RFID-Chip gespeicherten Daten werden im Schritt 72 von dem Empfänger 36 (Fig. 3) ausgelesen. Das auf dem Datenträger gespeicherte Programm (Schritt 68 der Fig. 5) wird im Schritt 74 von der Leseeinheit 42 der Vorrichtung gemäß Fig. 3 ausgelesen.

Im Schritt 76 wird im Steuergerät 44 (Fig. 3) das optisch ausgelesene Programm mit den vom RFID-Chip ausgelesenen Daten als Programmparameter ausgeführt. Bei einwandfreier Ausführung des Programms, bei der unterschiedliche festgelegte Schritte einwandfrei durchgeführt werden müssen, wird das Ergebnis als einwandfrei und damit das authentifizierbare Etikett als einwandfrei gewertet. Die in dem Steuergerät 44 enthaltene Einrichtung zum Ausführen des Programms kann durch einen Prozessor oder einen Interpreter gebildet sein.

### Bezugszeichenliste:

- 10: Etikett
- 12: RFID-Baustein
- 14: RFID-Transponder
- 16: Antenne
- 18: Trägersubstrat
- 20: Befestigungsfolie
- 22: optische Folie
- 24: Schwächungslinie
- 26: kodierte Identifikationsdaten
- 28: Barcode
- 30: Produktinformationen
- 32: Abbildung
- 34: Gegenstand
- 36: Sender/Empfänger
- 38: optisches Lesegerät
- 40: Beleuchtungseinheit
- 42: Leseeinheit
- 44: Steuergerät
- 46: Bildschirm
- 48: Polarisator
- 50: Bildplatte

## Patentansprüche

1. Authentifizierbares Etikett mit einem RFID-Baustein (12), in dem Daten zur Identifizierung des RFID-Bausteins und/oder Daten zur Identifizierung eines mit dem Etikett zu versehenden Gegenstandes (34) gespeichert sind, und einem optischen Datenträger (22), auf dem optisch auslesbare Information gespeichert ist,
**dadurch gekennzeichnet, dass**
die optisch auslesbare Information zumindest ein Programm enthält, mit dem in einem autorisierten Lesegerät vorbestimmte Befehle ausführbar sind, und
zumindest ein Teil der auf dem RFID-Baustein gespeicherten Daten Programmparameter für das optisch gespeicherte Programm betreffen, derart, dass eine einwandfreie Ausführung des Programms in dem Lesegerät unter Verwendung von diesen Programmparametern für die Authentifizierung des Etiketts notwendig ist.

2. Authentifizierbares Etikett nach Anspruch 1, **dadurch gekennzeichnet, dass** der optische Datenträger (22) eine Schicht enthält, in der die optisch auslesbaren Informationen derart gespeichert sind, dass sie bei Betrachtung unter normalem Tageslicht nicht lesbar sind.

3. Authentifizierbares Etikett nach Anspruch 2, **dadurch gekennzeichnet, dass** die optisch auslesbare Information bei Bestrahlung des optischen Datenträgers (22) mit polarisiertem Licht auslesbar ist.

4. Authentifizierbares Etikett nach Anspruch 2 oder 3, **dadurch gekennzeichnet, dass** die auf dem optischen Datenträger (22) gespeicherte Information ein latentes Bild des mit dem Etikett (10) zu versehenden Gegenstandes enthält.

5. Authentifizierbares Etikett nach einem der Ansprüche 1 bis 4, **dadurch gekennzeichnet, dass** der optische Datenträger (22) mit dem RFID-Baustein (12) in nicht zerstörungsfrei lösbarer Weise verbunden ist.

6. Authentifizierbares Etikett nach einem der Ansprüche 1 bis 5, **dadurch gekennzeichnet, dass** die optisch auslesbare Information auf dem RFID-Baustein (12) zu dessen Identifizierung gespeicherte Daten in in vorbestimmter Weise verschlüsselter Form enthält.

7. Authentifizierbares Etikett nach einem der Ansprüche 1 bis 6, **dadurch gekennzeichnet, dass** die optisch auslesbare Information auf dem RFID-Baustein (12) gespeicherte Daten zur Identifizierung des mit dem Etikett versehenen Gegenstandes in in vorbestimmter Weise verschlüsselter Form enthält.

8. Mit einem authentifizierbaren Etikett (10) nach einem der Ansprüche 1 bis 7 in nicht zerstörungsfrei lösbarer Weise verbundener Gegenstand (34).

9. Vorrichtung zum Authentifizieren eines authentifizierbaren Etiketts nach einem der Ansprüche 1 bis 5, enthaltend
ein RFID-Lesegerät (36, 44) zum Auslesen von in dem RFID-Baustein (12) gespeicherten Daten,
ein optisches Lesegerät (38) zum Auslesen der auf dem optischen Datenträger (22) gespeicherten Information, und
eine Einrichtung zum Ausführen des auf dem optischen Datenträger gespeicherten Programms.

10. Vorrichtung nach Anspruch 9, bei der die optisch auslesbare Information zumindest einen Teil der auf dem RFID-Baustein (12) gespeicherten Daten enthält, die vor ihrer Umwandlung in eine optisch auslesbare Form in vorbestimmter, nur autorisierten Stellen bekannter Weise verschlüsselt sind, und die Vorrichtung zusätzlich enthält
einen Wandler (50) zum Umwandeln der optisch ausgelesenen Information in digitale optische Daten,
eine Kodiereinrichtung (44), die die vom RFID-Lesegerät ausgelesenen Daten in der vorbestimmten Weise verschlüsselt oder die digitalen optischen Daten in zur vorbestimmten Weise reziproker Weise entschlüsselt, und
eine Vergleichseinrichtung (44), die die verschlüsselten Daten mit den optischen digitalen Daten oder die aus dem RFID-Baustein ausgelesenen Daten mit den entschlüsselten optischen digitalen Daten vergleicht.

11. Vorrichtung nach Anspruch 9 oder 10, enthaltend eine Einrichtung, die das authentifizierbare Etikett nach Vorliegen vorbestimmter Bedingungen zerstört.

12. Verfahren zum Authentifizieren eines authentifizierbaren Etiketts nach einem der Ansprüche 1 bis 5, enthaltend folgende Schritte,
a) Auslesen und Digitalisieren der als ausführbaren Programmcode hinterlegten Information aus der optisch auslesbaren Information,
b) Auslesen der auf dem RFID-Baustein gespeicherten Parameter,
c) Ausführen des Programms, und
d) Authentifizieren des Etiketts durch einwandfreies Ausführen des Programms.

13. Verfahren nach Anspruch 12, bei dem die optisch auslesbare Information auf dem optischen Datenträger (22) zumindest einen Teil der auf dem RFID-Baustein (12) gespeicherten Daten enthält, die vor ihrer Umwandlung in eine optisch auslesbare Form in vorbestimmter, nur autorisierten Stellen bekannter Weise verschlüsselt sind, und das Verfahren zusätzlich folgende Schritte enthält
e1) - Auslesen, Verschlüsseln und Speichern der auf dem RFID-Baustein gespeicherten Daten,
- Auslesen, Digitalisieren und Speichern der verschlüsselten optisch auslesbaren Information, und
- Vergleichen der gespeicherten verschlüsselten Daten mit der gespeicherten optisch ausgelesenen Information,
oder
e2) - Auslesen, Digitalisieren, Entschlüsseln und Speichern der verschlüsselten optisch auslesbaren Information,
- Auslesen und Speichern der auf dem RFID-Baustein gespeicherten Daten, und
- Vergleichen der nach dem Auslesen gespeicherten, auf dem RFID-Baustein gespeicherten Daten mit der nach dem Entschlüsseln gespeicherten optisch auslesbaren Information, wobei
für das Authentifizieren des Etiketts zusätzlich zum einwandfreien Ausführen des Programms ein erfolgreiches Vergleichen notwendig ist.

## Claims

1. An authenticatable label comprising a RFID-unit (12), in which data for the identification of the RFID-unit and/or data for the identification of an object (34) being provided with the label are stored, and an optical storage medium (22) on which optically readable information is stored,
**characterized by** that
the optically readable information comprises at least a programme by which predetermined commands are executable in an authorized reading device, and
at least a part of the data stored on the RFID-unit relates to programme parameters for the optically stored programme such that a correct execution of the programme in the reading device using these programme parameters is necessary for the authentification of the label.

2. The authenticatable label according to claim 1, **characterized by** that the optical storage medium (22) comprises a layer in which the optically readable information is stored such that it is not readable if being viewed under a normal daylight.

3. The authenticatable label according to claim 2, **characterized in that** the optically readable information is readable if the optical storage medium (22) is illuminated by polarized light.

4. The authenticatable label according to claim 2 or 3, **characterized in that** the information stored on the optical storage medium (22) comprises a latent picture of the object being provided with the label (10).

5. The authenticatable label according to any one of claims 1 to 4, **characterized in that** the optical storage medium (22) is connected to the RFID unit (12) in such a way that they cannot be detached without being destroyed.

6. The authenticatable label according to any one of claims 1 to 5, **characterized in that** the optically readable information comprises data stored on the RFID-unit (12) for the identification of the RFID-unit and being encrypted in a predetermined manner.

7. The authenticatable label according to any one of claims 1 to 6, **characterized in that** the optically readable information comprises data for the identification of the object being provided with the label, the data being stored on the RFID-unit (12) and being encrypted in a predetermined manner.

8. An object (34) being connected to an authenticatable label (10) according to anyone of claims 1 to 7 in such a way that they cannot be detached without being destroyed.

9. An apparatus for authenticating an authenticatable label according to any one of claims 1 to 5, comprising
a RFID reading device (36, 44) adapted to read out data being stored on the RFID-unit (12),
an optical reading device (38) adapted to read out the data being stored on the optical storage medium (22), and
an apparatus adapted to execute the programme being stored on the optical storage medium.

10. The apparatus according to claim 9, wherein the optically readable information comprises at least a part of the data being stored on the RFID-unit (12), the data being encrypted in a predetermined manner being known to authorized authorities only before being converted in an optically readable form, the apparatus further comprising
a converter (50) adapted to convert the information optically read out into digital optical data, an encrypting device (44) encrypting the data read out from the RFID reading device in the predetermined manner or decrypting the digital optical data in a manner inversed to the predetermined manner, and
a comparing device (44) comparing the encrypted data with the optical digital data or the data read out from the RFID-unit with the decrypted optical digital data.

11. The apparatus according to claim 9 or 10 comprising a device destroying the authenticatable label in case of an existence of a predetermined condition.

12. A method for authenticating an authenticatable label according to any one of claims 1 to 5, comprising the following steps
a) reading out and digitizing the information being stored as an executable programme code from the optically readable information,
b) reading out the parameters stored on the RFID-unit,
c) executing the programme, and
d) authenticating the label by correctly executing the programme.

13. The method according to claim 12, wherein the optically readable information on the optical storage medium (22) comprises at least a part of the data stored on the RFID-unit (12), the data being encrypted in a predetermined manner being known to authorized authorities only before the conversion, the method further comprising
e1) - reading out, encrypting and storing the data stored on the RFID-unit,
- reading out, digitizing and storing the encrypted optically readable information, and
- comparing the stored encrypted data with the stored optically read out information,
or
e2) - reading out, digitizing, decrypting and storing the encrypted optically readable information,
- reading out and storing the data stored on the RFID-unit, and
- comparing the data stored on the RFID-unit and being stored after being read out with the optically readable information being stored after decryption, wherein
a successful comparison is necessary for authenticating the label in addition to the correct execution of the programme.

## Revendications

1. Etiquette authentifiable avec un élément RFID (12), dans lequel sont mémorisées des données d'identification de l'élément RFID et/ou des données d'identification d'un objet (34) à pourvoir de l'étiquette, et un support de données optique (22), sur lequel sont mémorisées des informations lisibles optiquement,
**caractérisée en ce que**
les informations lisibles optiquement contiennent au moins un programme, à l'aide duquel des ordres prédéterminés peuvent être exécutés dans un lecteur autorisé, et **en ce que**
au moins une partie des données mémorisées sur l'élément RFID concerne des paramètres de programme pour le programme mémorisé de manière optique si bien qu'une exécution irréprochable du programme dans le lecteur peut être nécessaire en utilisant ces paramètres de programme pour l'authentification de l'étiquette.

2. Etiquette authentifiable selon la revendication 1, **caractérisée en ce que** le support de données optique (22) contient une couche dans laquelle les informations lisibles optiquement sont mémorisées de sorte qu'elles ne puissent être lues par examen à la lumière normale du jour.

3. Etiquette authentifiable selon la revendication 2, **caractérisée en ce que** les informations lisibles optiquement peuvent être lues lorsque le support de données optique (22) est exposé à un rayonnement avec de la lumière polarisée.

4. Etiquette authentifiable selon la revendication 2 ou 3, **caractérisée en ce que** les informations mémorisées sur le support de données optique (22) contiennent une image latente de l'objet à pourvoir de l'étiquette (10).

5. Etiquette authentifiable selon l'une quelconque des revendications 1 à 4, **caractérisée en ce que** le support de données optique (22) est connecté à l'élément RFID (12) d'une manière non détachable sans destruction.

6. Etiquette authentifiable selon l'une quelconque des revendications 1 à 5, **caractérisée en ce que** les informations lisibles optiquement contiennent des données mémorisées sur l'élément RFID (12) pour leur identification sous une forme cryptée de manière prédéterminée.

7. Etiquette authentifiable selon l'une quelconque des revendications 1 à 6, **caractérisée en ce que** les informations lisibles optiquement contiennent des données mémorisées sur l'élément RFID (12) pour identifier l'objet pourvu de l'étiquette sous une forme cryptée de manière prédéterminée.

8. Objet (34) relié à une étiquette authentifiable (10) selon l'une quelconque des revendications 1 à 7 de manière non détachable sans destruction.

9. Dispositif pour authentifier une étiquette authentifiable selon l'une quelconque des revendications 1 à 5, comportant :
un lecteur (36, 44) pour lire des données mémorisées dans l'élément RFID (12),
un lecteur optique (38) pour lire les informations mémorisées sur le support de données optique (22), et un dispositif pour exécuter le programme mémorisé sur le support de données optique.

10. Dispositif selon la revendication 9, dans lequel les informations lisibles optiquement contiennent au moins une partie des données mémorisées sur l'élément RFID (12), qui sont cryptées de manière connue avant leur conversion en une forme lisible optiquement en des points prédéterminés uniquement autorisés et le dispositif comporte également :
un convertisseur (50) pour convertir les informations lues optiquement en données optiques numériques,
un dispositif de codage (44) qui crypte les données lues par le lecteur RFID de manière prédéterminée ou qui décrypte les données optiques numériques de manière réciproque au mode prédéterminé, et
un dispositif de comparaison (44), qui compare les données cryptées aux données optiques numériques ou les données lues dans l'élément RFID aux données optiques numériques décryptées.

11. Dispositif selon la revendication 9 ou 10, comportant un dispositif qui détruit l'étiquette authentifiable dans des conditions prédéterminées.

12. Procédé pour authentifier une étiquette authentifiable selon l'une quelconque des revendications 1 à 5, comportant les étapes suivantes consistant à :
a) lire et numériser les informations enregistrées comme code de programme exécutable dans les informations lisibles optiquement,
b) lire les paramètres mémorisés sur l'élément RFID,
c) exécuter le programme, et
d) authentifier l'étiquette en exécutant de manière irréprochable le programme.

13. Procédé selon la revendication 12, dans lequel les informations lisibles optiquement sur le support de données optique (22) contiennent au moins une partie des données mémorisées sur l'élément RFID (12), qui sont cryptées de manière connue avant leur conversion sous une forme lisible optiquement en des points prédéterminés uniquement autorisés et le procédé comporte en outre les étapes suivantes consistant à :
e1) - lire, crypter et mémoriser les données mémorisées sur l'élément RFID,
- lire, numériser et mémoriser les informations lisibles optiquement cryptées, et
- comparer les données cryptées mémorisées aux informations lisibles optiquement mémorisées,
ou
e2) - lire, numériser, décrypter et mémoriser les informations lisibles optiquement cryptées,
- lire et mémoriser les données mémorisées sur l'élément RFID, et
- comparer les données mémorisées après lecture et mémorisées sur l'élément RFID aux informations lisibles optiquement mémorisées après décryptage, dans lequel
l'authentification de l'étiquette exige en outre une comparaison réussie pour l'exécution irréprochable du programme.
